# EUROPEAN PATENT APPLICATION

(11) **EP 4 769 825 A1**
(43) Date of publication of application: **01.07.2026**
(21) Application number: 25861711.7
(22) Date of filing: 25.06.2025
(51) Int. Cl.: H01M 50/609

(54) **HOPPER AND ELECTROLYTE INJECTION PALLET INCLUDING SAME**

(30) Priority: 17.10.2024 KR 20240141895
(71) Applicant: LG ENERGY SOLUTION, LTD., Seoul 07335 (KR)
(72) Inventor: LEE, Changyong, Daejeon 34122 (KR)
(74) Representative: Goddar, Heinz J.
(86) International application number: PCT/KR2025/008860
(87) International publication number: WO 2026/084173

(57) **Abstract**

A hopper includes a hopper body portion including an electrolyte inlet formed at one end portion, an electrolyte injection port formed at the other end portion, and a hollow connecting the electrolyte inlet and the electrolyte injection port and a buffer portion formed in a center of the electrolyte injection port of the hopper body portion. (Representative figure: 2)

## Description

### [Technical Field]

The present disclosure relates to a hopper and an electrolyte injection pallet including the same.

### [Background]

Secondary batteries, which have high applicability according to product groups and electrical characteristics, such as high energy density, have been widely applied not only to portable devices but also to electric vehicles (EVs) or hybrid electric vehicles (HEVs) driven by electric power sources.

Such secondary batteries have the primary advantage of being able to drastically reduce the use of fossil fuels, as well as the advantage of not generating any byproducts from the use of energy, and thus have come to prominence as a new energy source for improving environmental friendliness and energy efficiency.

Meanwhile, an electrolyte may be accommodated inside a secondary battery together with an electrode assembly. In the manufacture of a secondary battery, after the sealing of a housing constituting the secondary battery is completed, a hole may be formed again for the injection of the electrolyte, or the electrolyte may be injected before the sealing of the housing, and then, the housing may be sealed.

In any of these methods, it is necessary to prevent the electrolyte from leaking out of the secondary battery during the electrolyte injection process. In order to prevent the electrolyte from leaking, a connection portion between an injection device and the secondary battery has to be properly sealed.

For example, in the case of a cylindrical secondary battery, the electrolyte injection may be performed after the electrode assembly is inserted through an open portion on one side of the housing. The electrolyte injection may be performed by inserting one side of a pallet configured to connect a device for supplying an electrolyte and the secondary battery into the open portion of the housing of the secondary battery and supplying the electrolyte using an electrolyte supply device connected to the other side of the pallet.

However, there is a problem that a separator of the electrode assembly located inside the secondary battery may be loosened or collapsed due to a potential energy generated by the drop of the electrolyte during the process of injecting the electrolyte into the secondary battery. In particular, high pressure is applied to a core portion of the electrode assembly during the electrolyte injection process, which causes defects in the secondary battery.

### [Disclosure]

### [Technical Problem]

Therefore, the present disclosure provides a hopper capable of preventing damage to an electrode assembly accommodated inside a battery case during an electrolyte injection process and an electrolyte injection pallet including the same.

However, the technical problem to be solved by the present disclosure is not limited to the above-described problem, and other problems not mentioned may be clearly understood by those skilled in the art from the description of the disclosure described below.

### [Technical Solution]

According to an aspect of the present disclosure, a hopper includes a hopper body portion including an electrolyte inlet formed at one end portion, an electrolyte injection port formed at the other end portion, and a hollow connecting the electrolyte inlet and the electrolyte injection port and a buffer portion formed in a center of the electrolyte injection port of the hopper body portion.

The other side of the hopper body portion in which the electrolyte injection port is formed may include a section in which an inner diameter decreases toward the electrolyte injection port.

One side of the buffer portion may include a shape in which a cross-sectional area decreases toward the electrolyte inlet of the hopper body portion.

A length of one side of the buffer portion may be longer than 1/3 of a length of the hollow of the hopper body portion.

The other side of the buffer portion may protrude outside the electrolyte injection port of the hopper body portion.

The other side of the buffer portion may include a shape in which a cross-sectional area decreases as the other side protrudes from the electrolyte injection port of the hopper body portion.

According to an aspect of the present disclosure, there is provided an electrolyte injection pallet configured to connect an electrolyte supply device that supplies an electrolyte to the inside of a battery cell and an open portion formed on one side of a battery case. The electrolyte injection pallet includes a hopper and a sealing member. The hopper includes a hopper body portion and a buffer portion. The hopper body portion has an electrolyte inlet, a hollow, and an electrolyte injection port. The electrolyte inlet is formed at one end portion and faces the electrolyte supply device, while the electrolyte injection port is formed at the other end portion and faces the open portion of the battery case. The hollow connects the electrolyte inlet and the electrolyte injection port. The buffer portion is formed in a center of the electrolyte injection port of the hopper body portion. The sealing member is coupled to the electrolyte injection port of the hopper. It is pressed against the open portion of the battery case when an electrolyte is injected.

The other side of the hopper body portion in which the electrolyte injection port is formed may include a section in which an inner diameter decreases toward the electrolyte injection port.

One side of the buffer portion may include a shape in which a cross-sectional area decreases toward the electrolyte inlet of the hopper body portion.

A length of one side of the buffer portion may be longer than 1/3 of a length of the hollow of the hopper body portion.

The other side of the buffer portion may protrude outside the electrolyte injection port of the hopper body portion and may be positioned within the sealing member.

The other side of the buffer portion may include a shape in which a cross-sectional area decreases as the other side protrudes from the electrolyte injection port of the hopper body portion.

The electrolyte injection pallet may further include an O-ring coupled to the electrolyte inlet of the hopper and pressed against a supply nozzle of the electrolyte supply device when the electrolyte may be injected.

### [Advantageous Effects]

According to the present disclosure, damage to an electrode assembly accommodated inside a battery case may be stably prevented during an electrolyte injection process.

However, the effects obtainable through the present disclosure are not limited to the above-described effects, and other technical effects not mentioned may be clearly understood by those skilled in the art from the description of the disclosure given below.

### [Description of Drawings]

FIG. 1 is a cross-sectional view illustrating a hopper according to an aspect of the present disclosure.
FIG. 2 is a cross-sectional view illustrating an electrolyte injection pallet including the hopper of FIG. 1.
FIG. 3 is a diagram illustrating a process of injecting an electrolyte using the electrolyte injection pallet of FIG. 2.
FIG. 4 is a diagram illustrating an electrolyte injected through the electrolyte injection pallet of FIG. 2.
FIG. 5 is a diagram illustrating a state of injecting an electrolyte using an electrolyte injection pallet according to a comparative example.
FIG. 6 is a graph comparing a change in shear stress that occurs during a process of injecting an electrolyte according to an experimental example of FIG. 4 and the comparative example of FIG. 5.

### [Mode for Disclosure]

The advantages and features of the present disclosure and the methods for achieving them will become apparent by referring to the aspects described in detail below together with the accompanying drawings. However, the present disclosure is not limited to the aspects disclosed below but may be implemented in various different forms, and these aspects are provided only to make the disclosure of the present disclosure complete and to fully inform those skilled in the art of the scope of the disclosure, and the present disclosure is defined only by the scope of the claims. Accordingly, in some aspects, well-known process steps, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various Figures are thus not to scale. Like reference numerals designate like elements throughout the specification. It will be understood that when an element, such as a layer, film, region, or substrate is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate is referred to as being "below" another element, it may be directly below the other element or intervening elements may also be present. In contrast, when an element is referred to as being "directly under" another element, there are no intervening elements present.

Throughout the specification, unless otherwise specifically stated, each element may be singular or plural.

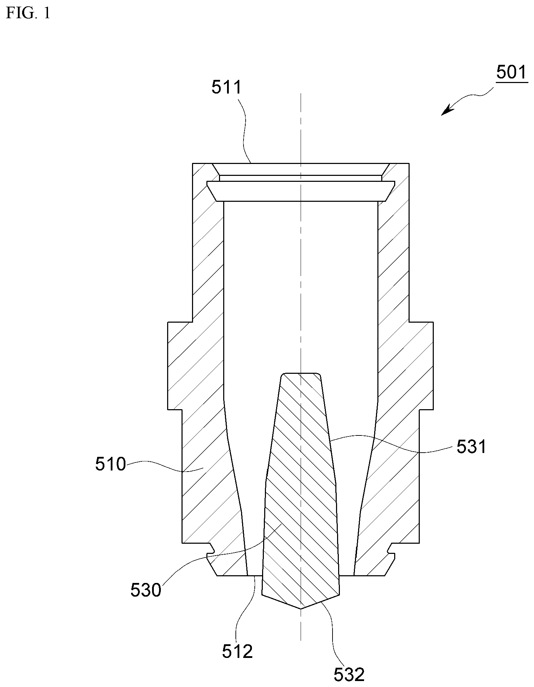

Hereinafter, a hopper 501 and an electrolyte injection pallet 101 including the hopper according to an aspect of the present disclosure will be described with reference to FIGS. 1 to 3.

The hopper 501 and the electrolyte injection pallet 101 including the hopper according to an aspect of the present disclosure are configured to connect an electrolyte supply device 900 that supplies an electrolyte to the inside of a battery cell 100 and an open portion formed on one side of a battery case 50 and are used to seal a connection portion between the electrolyte supply device 900 and the battery cell 100 to prevent leakage of the electrolyte so that the electrolyte does not leak out of the battery cell 100 during an electrolyte injection process.

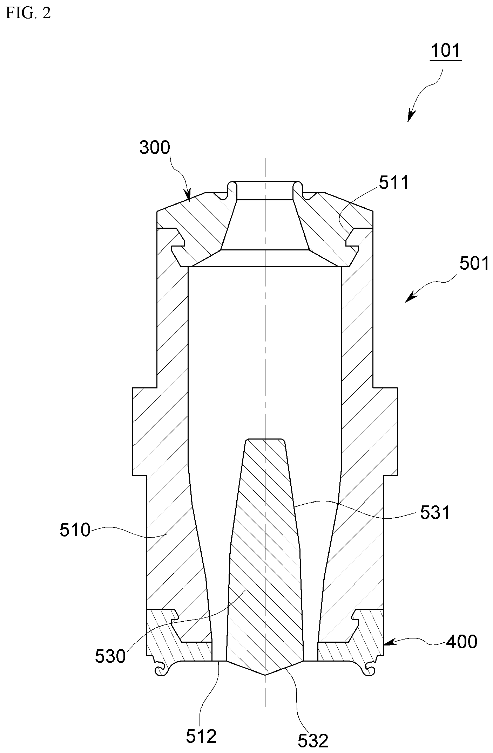

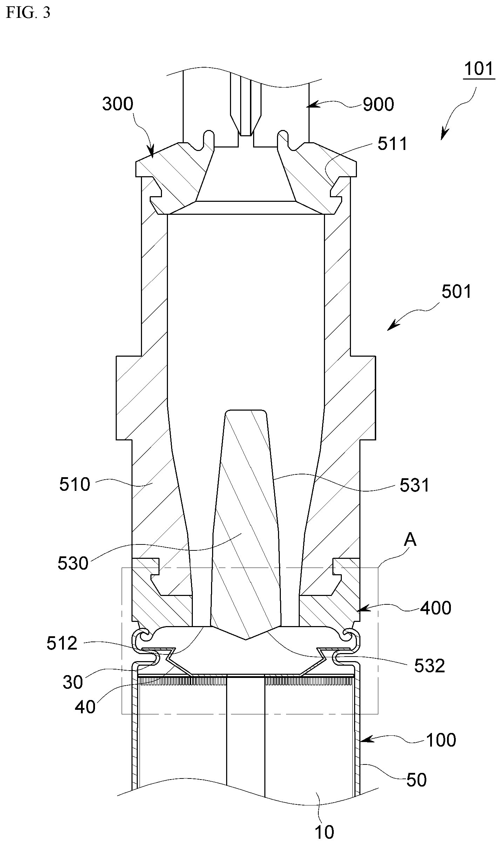

FIG. 1 is a diagram illustrating the hopper 501 according to an aspect of the present disclosure, FIG. 2 is a diagram illustrating the electrolyte injection pallet 101 including the hopper 501, and FIG. 3 is a diagram illustrating a process of injecting an electrolyte using the electrolyte injection pallet 101.

Referring to FIG. 1, the hopper 501 is used to guide the electrolyte supplied by the electrolyte supply device 900 (shown in FIG. 3) into the inside of the battery case 50. Specifically, the hopper 501 includes a hopper body portion 510 and a buffer portion 530.

The hopper body portion 510 has an electrolyte inlet 511 formed at one end portion and an electrolyte injection port 512 formed at the other end portion and has a hollow connecting the electrolyte inlet 511 and the electrolyte injection port 512.

In this case, the other side of the hopper body portion 510 in which the electrolyte injection port 512 is formed may include a section in which the inner diameter decreases toward the electrolyte injection port 512.

That is, the inner diameter of the electrolyte injection port 512 is formed smaller than the inner diameter of the electrolyte inlet 511, and at this time, the inner diameter of the other side in which the electrolyte injection port 512 is formed may gradually decrease toward the electrolyte injection port 512.

Accordingly, the electrolyte introduced into the electrolyte inlet 511 hits an inclined surface formed in the hollow on the other side of the hopper body portion 510, thereby alleviating the impact.

The buffer portion 530 also offsets the potential energy of the electrolyte introduced into the electrolyte inlet 511 of the hopper body portion 510.

Specifically, one side 531 of the buffer portion 530 may include a shape in which the cross-sectional area decreases in a direction toward the electrolyte inlet 511 of the hopper body portion 510. Also, the length of one side 531 of the buffer portion 530 may be formed to be longer than about 1/3 of the length of the hollow of the hopper body portion 510. In other words, a distance from the electrolyte inlet 511 of the hopper body portion 510 to one side 531 of the buffer portion 530 may be formed to be smaller than 2/3 of a distance from the electrolyte inlet 511 of the hopper body portion 510 to the electrolyte injection port 512.

Accordingly, the electrolyte introduced into the electrolyte inlet 511 of the hopper body portion 510 hits the inclined surface formed on one side 5310 of the buffer portion 530 and then flows down along the inclined surface, thereby offsetting the potential energy.

In addition, according to an aspect of the present disclosure, since one side 531 of the buffer portion 530 has a sufficient length, the distance from the electrolyte inlet 511 of the hopper body portion 510 to one side 531 of the buffer portion 530 becomes short, thereby reducing the phenomenon of the electrolyte introduced into the electrolyte inlet 511 of the hopper body portion 510 falling and hitting the buffer portion 530 to splash. If the length of one side 531 of the buffer portion 530 is formed to be less than about 1/3 of the length of the hollow of the hopper body portion 510, the distance from the electrolyte inlet 511 of the hopper body portion 510 to one side 531 of the buffer portion 530 may become long and thus, when the electrolyte falls due to the potential energy of the electrolyte introduced into the electrolyte inlet 511 and collides with the buffer portion 530, numerous splashes may occur, and due to this splashing of the electrolyte, bubbles may occur, and after the electrolyte is injected into the battery cell 100 (as shown in FIG. 3), air pockets may be formed.

In addition, the other side 532 of the buffer portion 530 may protrude out of the electrolyte injection port 512 of the hopper body portion 510. In addition, the other side of the buffer portion 530 may include a shape in which the cross-sectional area decreases as it protrudes from the electrolyte injection port 512 of the hopper body portion 510. Accordingly, the fluidity of the electrolyte injected into the inside of the battery case 50 may be improved, thereby allowing the electrolyte to naturally flow into the inside of the battery case 50.

Referring to FIG. 2, the electrolyte injection pallet 101 includes the hopper 501 and a sealing member 400. In addition, the electrolyte injection pallet 101 may further include an O-ring 300. Here, the hopper 501 is the same as that described above with reference to FIG. 1.

The hopper 501 used in the electrolyte injection pallet 101 is installed so that the electrolyte inlet 511 faces the electrolyte supply device 900 and the electrolyte injection port 512 faces the open portion of the battery case 50.

The sealing member 400 is coupled to the electrolyte injection port 512 of the hopper 501 and is in close contact with the open portion of the battery case 50 when the electrolyte is injected. At this time, the other side of the buffer portion 530 of the hopper 501 may protrude to the outside of the electrolyte injection portion 512 of the hopper body portion 510 and may be positioned inside the sealing member 400.

The O-ring 300 may be coupled to the electrolyte inlet 511 of the hopper 501 and may be in close contact with a supply nozzle of the electrolyte supply device 900 when the electrolyte is injected.

In this manner, by coupling the sealing member 400 and the O-ring 300 to both end portions of the hopper 501, the electrolyte may be stably prevented from leaking during the electrolyte injection process.

The process of injecting the electrolyte using the hopper 501 and the electrolyte injection pallet 101 including the hopper according to an aspect of the present disclosure will be described with reference to FIG. 3.

First, before describing the process of injecting the electrolyte using the electrolyte injection pallet 101, an exemplary form of the cylindrical battery cell 100, which is a target of the electrolyte injection, will be described.

The cylindrical battery cell 100 illustrated in FIG. 3 indicates an unfinished state during the manufacturing process. As illustrated in FIG. 3, the cylindrical battery cell 100 may include an electrode assembly 10, the battery case 50, and a current collector 40.

The electrode assembly 10 may be a jelly roll type electrode assembly having a winding center hole formed in a core portion.

The battery case 50 may be configured to accommodate the electrode assembly 10 through the open portion formed at one end portion thereof. Also, the battery case 50 may include a beading portion 54 formed to be depressed in a centripetal direction near the open one end portion.

This beading portion 54 may be formed by indenting an outer circumference of the battery case 50 and may be formed to prevent the electrode assembly 10, which may have a size corresponding to the width of the battery case 50, from escaping through the open portion formed at one end of the battery case 50.

The current collector 40 may include a negative electrode current collector connected to a negative electrode uncoated portion provided in a negative electrode of the electrode assembly 10 and a positive electrode current collector connected to a positive electrode uncoated portion provided in a positive electrode of the electrode assembly.

The current collector 40 illustrated as an example in FIG. 3 is a negative electrode current collector. The negative electrode current collector 40 may be coupled to an end portion of the electrode assembly 10 adjacent to the open portion. Also, the current collector 40 may be electrically connected to the battery case 50. In this manner, the battery case 50 connected to the current collector 40 functions as a negative terminal. That is, the battery case 50 may have the same polarity as that of the negative electrode of the electrode assembly 10. To this end, the battery case 50 may be formed of a material having conductivity, such as metal. The material of the battery case 50 may be formed of a conductive metal, such as aluminum, steel, stainless steel, etc., but is not limited thereto.

Meanwhile, the positive electrode current collector, which is not shown in FIG. 3, may be connected to the positive electrode uncoated portion provided on the positive electrode of the electrode assembly 10 at the opposite side of the cylindrical battery cell 100, that is, at the lower end of the electrode assembly 10.

The cylindrical battery cell 100 to which the electrolyte is injected using the hopper 501 and the electrolyte injection pallet 101 including the hopper according to an aspect of the present disclosure has been described above, but the cylindrical battery cell 100 to which the electrolyte is injected using the electrolyte injection pallet 101 according to the present disclosure is not necessarily limited to the cylindrical battery cell 100 having the structure described above.

The electrolyte is injected using the electrolyte injection pallet 101 according to the present disclosure into the battery case 50 in which the electrode assembly 10 described above is accommodated.

Hereinafter, a process of injecting an electrolyte into the inside of a battery case 50 using an electrolyte injection pallet according to the present disclosure will be described.

In order to inject an electrolyte, the sealing member 400 of the electrolyte injection pallet 101 is pressed against the open portion of the battery case 50. At this time, the sealing member 400 may be detachably coupled to the open portion of the battery case 50. For example, the sealing member 400 has a joining recess into which an edge of the open portion of the battery case 50 is inserted, and the sealing member 400 may be coupled and pressed against the open portion of the battery case 50 in such a manner that the edge of the open portion of the battery case 50 is fitted into the joining recess of the sealing member 400.

Also, the injection nozzle of the electrolyte injection supply device 900 is pressed against the O-ring 300 of the electrolyte injection pallet 101.

Thereafter, an electrolyte is injected into the inside of the battery case 50. At this time, due to the potential energy of the electrolyte introduced into the electrolyte inlet 511 of the hopper 501, an impact may occur when the electrolyte falls, and the potential energy of the electrolyte may be offset as the electrolyte hits the buffer portion 530 formed in the center of the electrolyte injection port 512 of the hopper body portion 510.

Specifically, the other side of the hopper body portion 510 in which the electrolyte injection port 512 is formed may include a section in which the inner diameter decreases toward the electrolyte injection port 512, and one side 531 of the buffer portion 530 may include a shape in which the cross-sectional area decreases in a direction toward the electrolyte inlet 511 of the hopper body portion 510.

Accordingly, the electrolyte introduced into the electrolyte inlet 511 of the hopper 501 hits the inclined surface formed on each of the other side of the hopper body portion 510 and one side 531 of the buffer portion 530 and then flows down along the inclined surface, thereby offsetting the potential energy.

At this time, the length of one side 531 of the buffer portion 530 is formed to be longer than about 1/3 of the length of the hollow of the hopper body portion 510, so that the potential energy of the electrolyte may be sufficiently offset.

If the length of one side 531 of the buffer portion 530 is shorter than about 1/3 of the length of the hollow of the hopper body portion 510, the distance from the electrolyte inlet 511 of the hopper 501 to one side 531 of the buffer portion 530 may become longer and the electrolyte introduced into the electrolyte inlet 511 of the hopper 501 may cause numerous splashes after hitting the buffer portion 530. If the electrolyte splashes a lot like this, bubbles may occur, forming air pockets inside the battery cell 100.

However, as described above, according to the present disclosure, since the buffer portion 530 has a sufficient length, the electrolyte introduced into the electrolyte inlet 511 of the hopper 501 does not splash a lot even when it hits the buffer portion 530, and flows down along the inclined surfaces formed on the other side of the hopper body portion 510 and one side 531 of the buffer portion 530, thereby suppressing the occurrence of bubbles and suppressing the phenomenon of air pockets being formed inside the battery cell 100.

In addition, a shape in which the cross-sectional area decreases as it protrudes from the electrolyte injection port 512 of the hopper body portion 510 is formed on the other side 532 of the buffer portion 530, thereby improving the fluidity of the electrolyte introduced into the inside of the battery case 50, so that the electrolyte may be naturally introduced into the inside of the battery case 50.

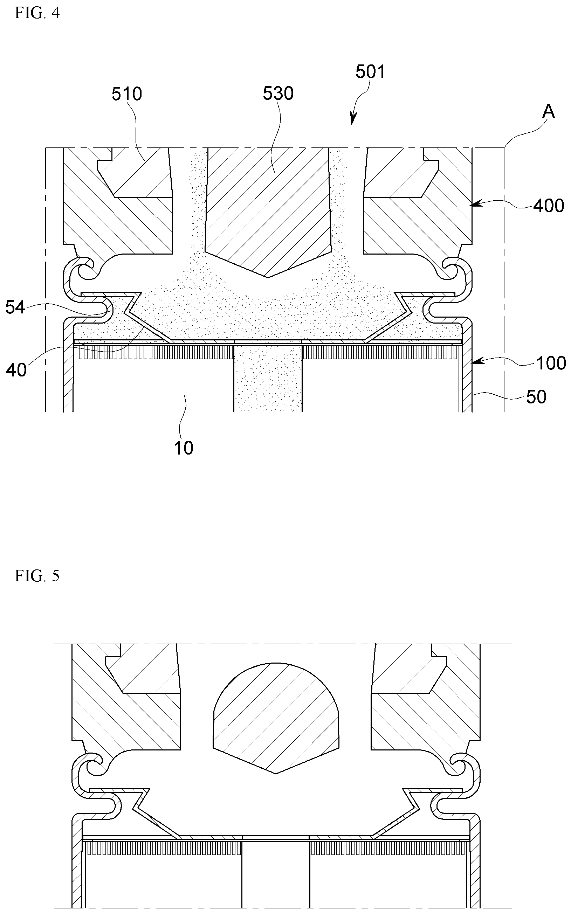

FIG. 4 exemplarily illustrates a form in which an electrolyte is injected into the inside of a battery case through an electrolyte injection pallet according to the present disclosure.

Referring to FIG. 4, the splashing of the electrolyte may be minimized to suppress the occurrence of bubbles, thereby preventing air pockets from being formed inside the battery case 50, and the electrolyte may be naturally injected into the inside of the battery case 50, thereby stably preventing damage to the electrode assembly 10, particularly, the separator from being loosened or collapsed in the core portion of the electrode assembly 10.

With such a configuration, according to an aspect of the present disclosure, damage to the electrode assembly 10 accommodated inside the battery case 50 during the electrolyte injection process may be stably prevented.

Hereinafter, how the performance of alleviating the impact of the electrolyte drop varies depending on the length of the buffer portion 530 will be described with reference to FIGS. 4 to 6.

As illustrated in FIG. 4, an experimental example has the buffer portion 530 according to an aspect of the present disclosure as illustrated in FIG. 4, and, as an example, the length of one side 531 of the buffer portion 530 corresponds to 3/7 of the length of the hollow of the hopper body portion 510.

As illustrated in FIG. 5, in a comparative example, the length of one side of the buffer portion corresponds to 1/7 of the length of the hollow of the hopper body portion 510.

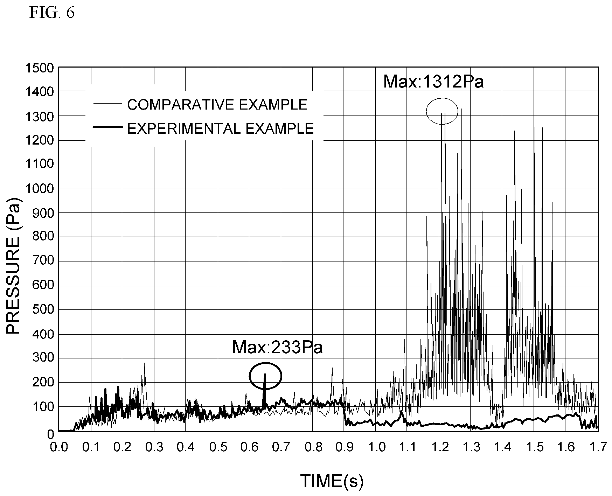

FIG. 6 illustrates the results of measuring the shear stress occurring when the electrolyte is injected in each of the experimental example and the comparative example.

As can be seen in FIG. 6, it may be confirmed that the shear stress occurred in the comparative example is about 6 times higher than that in the experimental example. In the comparative example, even though the buffer portion exists, the phenomenon of the separator loosening or collapsing in the core portion of the electrode assembly 10 during the injection process of the electrolyte may occur.

That is, it may be confirmed through experiments that simply providing the buffer portion 530 in the hopper 501 is not sufficient to alleviate the occurrence of shear stress and that the length of one side 531 of the buffer portion 530 has to be formed to be at least 1/3 longer than the length of the hollow of the hopper body portion 510 to sufficiently offset the potential energy of the electrolyte.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the aspects described above should not be understood as requiring such separation in all aspects, and it should be understood that the described program components and systems may generally be integrated together in a single software product or packaged into multiple software products.

Although the aspects of the present disclosure have been described above with reference to the drawings, it will be understood by those skilled in the art that the present disclosure may be embodied in other specific forms without changing the technical spirit or essential features of the present disclosure. Therefore, the above-described aspects should be understood as being illustrative in all aspects and not restrictive, the scope of the present disclosure being described in detail in the following claims, and all changes or modifications derived from the meaning, scope and equivalent concept of the claims should be construed as falling within the scope of the present disclosure.

### [Detailed Description of Main Elements]

10: electrode assembly
40: current collector
50: battery case
54: beading portion
100: battery cell
101: electrolyte injection pallet
300: O-ring
400: sealing member
501: hopper
510: hopper body portion
511: electrolyte inlet
512: electrolyte injection port
530: buffer portion
900: electrolyte supply device

### [Industrial Applicability]

The present disclosure may be used to provide a hopper and an electrolyte injection pallet including the hopper for stably preventing damage to an electrode assembly accommodated inside a battery case during an electrolyte injection process.

## Claims

1. A hopper comprising:
a hopper body portion including an electrolyte inlet formed at one end portion, an electrolyte injection port formed at the other end portion, and a hollow connecting the electrolyte inlet and the electrolyte injection port; and
a buffer portion formed in a center of the electrolyte injection port of the hopper body portion.

2. The hopper of claim 1, wherein the other side of the hopper body portion in which the electrolyte injection port is formed includes a section in which an inner diameter decreases toward the electrolyte injection port.

3. The hopper of claim 1, wherein one side of the buffer portion includes a shape in which a cross-sectional area decreases toward the electrolyte inlet of the hopper body portion.

4. The hopper of claim 3, wherein a length of one side of the buffer portion is longer than 1/3 of a length of the hollow of the hopper body portion.

5. The hopper of claim 3, wherein the other side of the buffer portion protrudes outside the electrolyte injection port of the hopper body portion.

6. The hopper of claim 5, wherein the other side of the buffer portion includes a shape in which a cross-sectional area decreases as the other side protrudes from the electrolyte injection port of the hopper body portion.

7. An electrolyte injection pallet configured to connect an electrolyte supply device supplying an electrolyte to the inside of a battery cell and an open portion formed on one side of a battery case, the electrolyte injection pallet comprising:
a hopper, comprising:
a hopper body portion including an electrolyte inlet, which faces the electrolyte supply device, formed at one end portion, an electrolyte injection port, which faces the open portion of the battery case, formed at the other end portion, and a hollow connecting the electrolyte inlet and the electrolyte injection port; and
a buffer portion formed in a center of the electrolyte injection port of the hopper body portion; and
a sealing member coupled to the electrolyte injection port of the hopper and pressed against the open portion of the battery case when an electrolyte is injected.

8. The electrolyte injection pallet of claim 7, wherein the other side of the hopper body portion in which the electrolyte injection port is formed includes a section in which an inner diameter decreases toward the electrolyte injection port.

9. The electrolyte injection pallet of claim 7, wherein one side of the buffer portion includes a shape in which a cross-sectional area decreases toward the electrolyte inlet of the hopper body portion.

10. The electrolyte injection pallet of claim 9, wherein a length of one side of the buffer portion is longer than 1/3 of a length of the hollow of the hopper body portion.

11. The electrolyte injection pallet of claim 9, wherein
the other side of the buffer portion protrudes outside the electrolyte injection port of the hopper body portion and is positioned within the sealing member.

12. The electrolyte injection pallet of claim 11, wherein the other side of the buffer portion includes a shape in which a cross-sectional area decreases as the other side protrudes from the electrolyte injection port of the hopper body portion.

13. The electrolyte injection pallet of claim 7, further comprising an O-ring coupled to the electrolyte inlet of the hopper and pressed against a supply nozzle of the electrolyte supply device when the electrolyte is injected.
